Europäisches Patentamt

European Patent Office (11) Publication number: **0 367 633**

Office européen des brevets **A2**

## (12) EUROPEAN PATENT APPLICATION

(21) Application number: 89311473.6

(51) Int. Cl.5 **F16L 55/162**

(22) Date of filing: 06.11.89

(30) Priority: 04.11.88 GB 8825851

(43) Date of publication of application:
09.05.90 Bulletin 90/19

(84) Designated Contracting States:
AT BE DE ES FR GB GR IT NL SE

(71) Applicant: **SHAFFER DIVISION OF BAROID LTD.**
**Denmore Road Denmore Industrial Estate Bridge of Don**
**Aberdeen AB2 8JW Scotland(GB)**

(72) Inventor: **Sneddon, John Leishman**
**18 Eilean Rise Ellon**
**Aberdeenshire AB4 9NF Scotland(GB)**

(74) Representative: **Pacitti, Pierpaolo Alfonso M.E. et al**
**Ian G. Murgitroyd and Company Mitchell House 333 Bath Street**
**Glasgow G2 4ER(GB)**

(54) Temporary plug for pipeline.

(57) A temporary pipeline plug comprises a pipeline seal unit (140) and a detachable coupled pipeline pig for propelling the seal unit along the pipeline (12). The pipeline pig is a self propelling pig capable of propelling itself along the pipeline independently of any fluid medium corred by the pipeline. The seal unit is self anchoring being provided with anchoring means (154) to seal the unit against movement along the pipeline.

EP 0 367 633 A2

## Temporary Plugs for Pipelines

This invention relates to temporary plugs for pipelines.

From time to time, it may be necessary that a section of a hydrocarbon pipeline be temporarily blocked-off from the remainder of the pipeline and the source of high-pressure hydrocarbons. Such temporary isolation of a pipeline section may be required, for example, for purposes of maintenance, repair, and fitting of new equipment, such as the retro-fitting of a shut-off valve. A plug for temporary closure of a pipeline may require to be installed at a location in the pipeline which is remote from any practicable access point, and therefore requires to be capable of being remotely installed, operated, and retrieved. The temporary plug may have to provide an effective seal against hydrocarbons at high pressures, and must necessarily then maintain its position against the end force resulting from such high pressure and which tends to drive the plug along the pipeline.

Proposals have been made for devices intended to satisfy one or more of the above requirements, but are imperfect in meeting these and/or other performance standards.

According to the present invention a temporary pipeline plug comprises a self-anchoring pipeline seal unit and a detachably coupled pipeline pig for propelling the self-anchoring seal along the pipeline.

The pipeline pig is preferably a self-propelling pig capable of propelling itself along the pipeline independently of any fluid medium carried by the pipeline, preferably by crawling of differential stepping movement.

The self-anchoring pipeline seal unit preferably includes one or more of the following features:-

(a) a circumferential chamber which is inflatable and thereby expansible by the differential pressure of fluid medium in the pipeline on one side of the seal unit in excess of the pressure on the other side of the seal unit, the exterior of the chamber being adapted to grip the pipeline when so inflated, preferably by the provision of friction shoes secured thereon;

(b) a circumferential anchor seal which is mechanically actuable selectively to engage or disengage the pipeline so as both to seal the pipeline and to anchor the seal unit against movement along the pipeline;

(c) a parking brake operable to hold the seal unit against movement along the pipeline;

(d) a fluid passage through the seal unit from one end to the other end, and closable at the low pressure end by a double-acting check valve;

(e) power and/or signal coupling means for coupling the seal unit to the pig for transmission of hydraulic or pneumatic or electrical power/or signals therebetween.

Feature (b) above is preferably operatively coupled to an anchor seal actuator within the seal unit, the actuator preferably taking the form of a motor-driven screw actuator selectively operable to cause radial expansion of the anchor seal into sealing and anchoring contact with the pipeline.

Embodiments of the invention will now be described by way of example with reference to the accompanying drawings wherein;

Fig. 1 is a longitudinal sectional elevation of a first embodiment;

Fig. 2 is a longitudinal sectional elevation of a second embodiment in use in conjunction with the first embodiment;

Fig. 3 is a longitudinal sectional elevation of a self-propelling pipeline pig utilized for transferring a pipeline seal unit to its operational location;

Fig. 4 shows details of hydraulic couplings for use in conjunction with the invention;

Fig. 5 shows a seal unit and a pig in close proximity within a pipeline;

Fig. 6 shows a concatenation of seal units for use in particular circumstances;

Fig. 7 schematically illustrates the temporary plugging of a pipeline system adjacent a T-junction in the pipeline system;

Fig. 8A and 8B show details of a brake for use in conjunction with the invention; and

Fig. 9 shows details of an articulation system for use in conjunction with the invention.

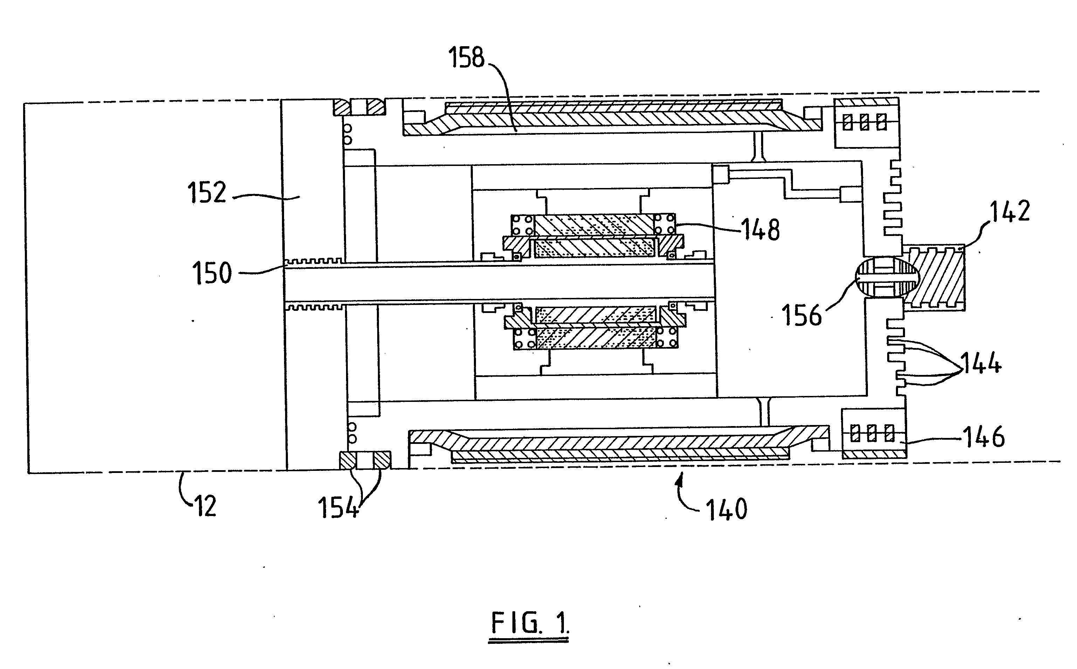

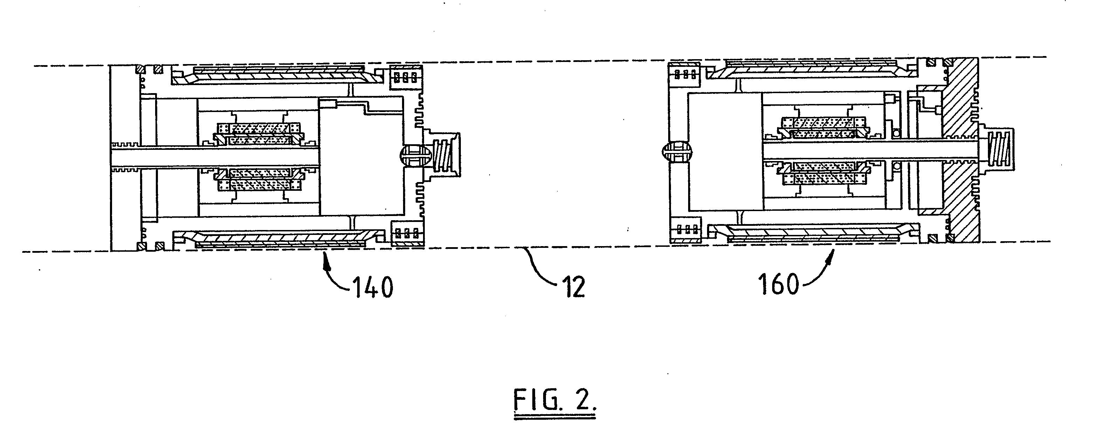

Figs. 1 and 2 show various arrangements of temporary inline plugs, designed to facilitate the isolation of high pressure pipeline media from locations in the pipeline where "hotwork" is being carried out.

Such a "hotwork" situation might be the installation of a new valve into an existing pipeline containing high pressure hydrocarbons.

The prime movers of the temporary plugs and their retrieving device may be selected from any prime mover arrangement depending on the circumstances. it is possible for example to utilise electrical means in the above example as the environment in which they will find themselves energised will be at all times wither well above the upper explosive limit (U.E.L.) or well below the lower explosive limit (L.E.L.) of the medium. It is therefore expected that their optimum theatre of operation would lie in the unclassified situation. Utilisation of well established zone 1, sparkless and intrinsically safe technology, among others coupled with other features of the design provide for the safe installation and operation of the temporary plugs directly in the confines of a high pressure hydrocarbon pipeline.

The design of the plug itself must be such that any attachment to the inside of the pipeline must ensure, at best no and at worst, withstandable, damage to its I.D.

It is estimated that, assuming a coefficient of friction of 0.3 between the plug and the pipeline I.D., it would be necessary to produce a pressure of approximately 1000 psi. Over a surface area of 6222 sq.ins. to ensure that a plug would maintain its set position in a 36 inch diameter pipeline bearing 2000 psi.

Investigation into the use of compression type devices to attach the plug to the pipeline I.D. produced negative conclusions as, were it possible to achieve the torque requirements to compress them such compression would render the pipeline useless as it would suffer fatal stress fatigue.

Consideration was then given to the use of the pipeline pressure itself at the attachment force. Over the same attachment area a 2000 psi medium would produce a total surface area force of approximately 555 Tons. This, with an assured 0.3 coefficient of friction would result in a usable force of approximately 1666 Ton against an axial force of approximately 908 Ton tending to push the plug out. This 1666 Ton force will result in a completely stable plug at 2000 psi pipeline pressure.

The following description of operation and setting is based on a requirement to isolate part of a 36-inch line at 2000 psi to allow the inclusion of a 36-inch ball valve. The case in question assumes a straight pipe section from the pig launcher to the section of pipe where the temporary plug or plugs will be situated. It should be noted that with multiple plugs of less than 1.4 metres length it will be possible to position the plugs with 5D bends, probably 3D minimum.

In situations where the route to the desired plug position is direct it is envisaged that plugs with an envelope similar to that of a pig of 1.4 metre length would be used. Multiple sitings may be accomplished and longer plugs may be used.

Fig. 1 illustrates a temporary plug unit 140 (minus its setting/retrieval device) en route to the selected station in the temporarily evacuated pipeline 12. The plug unit 140 is either screwed or latched to its setting device via a coupling 142 and securely mated electrical through male and female conductive discs 144. Only a fail-safe brake 146 is energised via a capacitive circuit which is discharged when on station to release the brake mechanism and hold the temporary plug unit 140 stationary within the pipework 12.

After the brake 146 has been released power is transferred through the conductive discs 144 to an integral electric motor 148 within the temporary plug unit 140. As the motor 148 slowly rotates a 150, an upstream end sealing flange 152 is moved toward seals 154, ultimately securing a positive seal and mechanical anchorage on the I.D. of the pipeline 12. Due to the design of the lead and pitch of the screw 150, it will only be necessary to rotate the motor 148 inside the temporary plug unit 140 a very small number of revolutions and then the power may be removed, without sparking. The seals 154 will remain locked in this position until the motor 148 is reversed when it is required to remove the plug unit 140. Assuming that only one temporary plug unit 140 is required to be set, the setting device may now be unlatched and drawn up the riser into the pig launcher.

The portion of the pipeline 12 between the launcher and the temporary plug 140 may now be depressurised and purged with an inert gas. Upon depressuring a pressure differential will rise across the optional, specially designed two-way check valve 156 which has slow-closing characteristics to obviate pressure surges. Once the valve 156 is totally sealed the resulting pressure within the temporary plug unit 140 will have expanded the circumferential friction chamber 158 on the O.D. of the plug unit 140 to secure a holding force against the pipe I.D. greatly in excess of the pipeline fluid pressure force tending to dislodge the plug unit 140. Any increase in pipeline pressure, i.e. surges, will only tend to increase the holing force on the pipe wall. Conversely should the pressure fall the holding force shall decrease also in a fashion which will maintain excess differential between it and the dislodging force.

In Fig. 2 a temporary pressure rest plug unit 160 of similar construction to the temporary plug 140 has been set in the depressurised section of the pipe 12 in readiness for pressure testing to 1.5 times working pressure. The setting procedure is exactly similar to that of the main temporary plug unit 140 with the friction chambers supplying a gross force of 8333 Ton (2502 Net) against a dislodging force of 1363 Ton.

Upon completion of pressure testing the pressure is decreased until the pressure on the test plug 160 is equalised on both sides, the retrieval device latched on and the plug 160 hauled up.

The section between the launcher and the first temporary plug 140 is then brought up to main line pressure and the main temporary plug 140 simultaneously removed. The pipeline 12 is now back to operational status.

It is possible that a plurality of temporary plugs can be utilised (for example in case of low plug/pipeline friction) by suitably interlinking them.

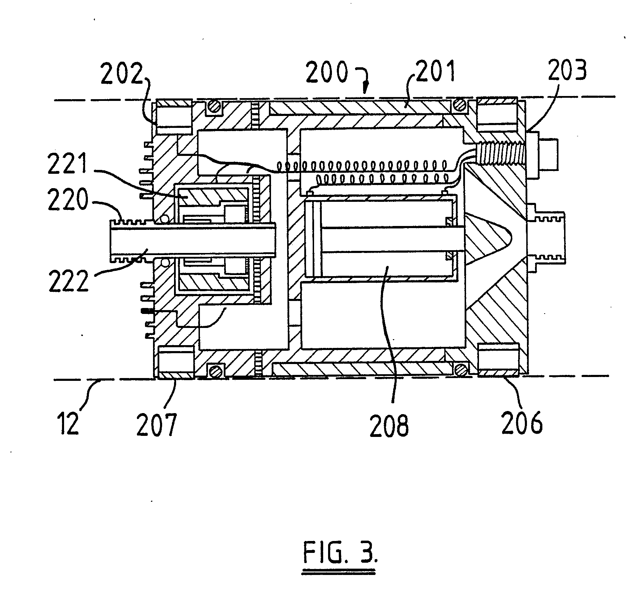

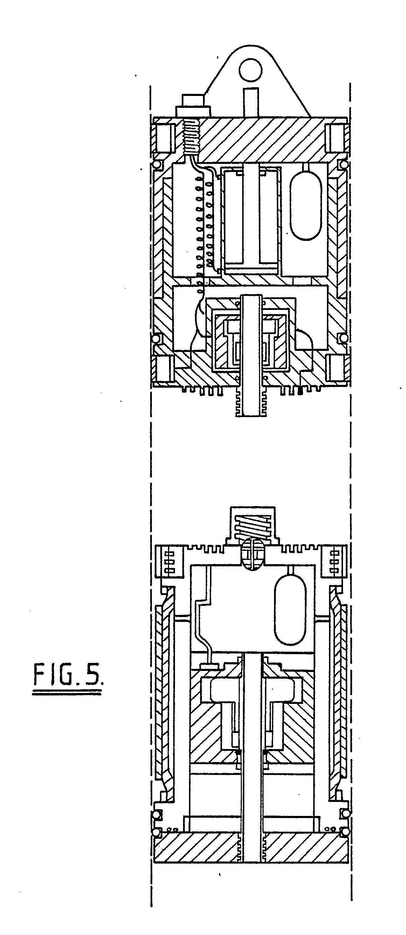

The Templar System shown in Figs 3-9 is an arrangement of inline plugs or seal units which may be introduced into live pipelines. Once on station and sealed the Templar will allow depressurisation of one side of the pipeline. It is specifically designed to cater for situations where it would be inconvenient to depressure the complete pipeline. The system may be operated in various high pressure environments whether the pipeline medium is passive (water or inert gases) or potentially hazardous.

The name Templar is an abbreviation of TEMPORARY LINE / ANNULAR REACTOR and is derived from the device's capability to react with the pipeline medium line pressure to provide an immovable barrier between high and low pressure areas.
Templar utilises the medium itself as the restraining force and produces a grip on the inside of the pipeline which will always be Magnitudes of Tons greater than the axial force attempting to drive the Templar out of its intended location.

In some situations it may prove judicious to station more than one plug device in the pipeline or annular i.e. where the coefficient of friction is small or the ratio of the axial force to the radial restraining force is under 1.5 in gross terms, i.e. Fr/Fa 1.5.

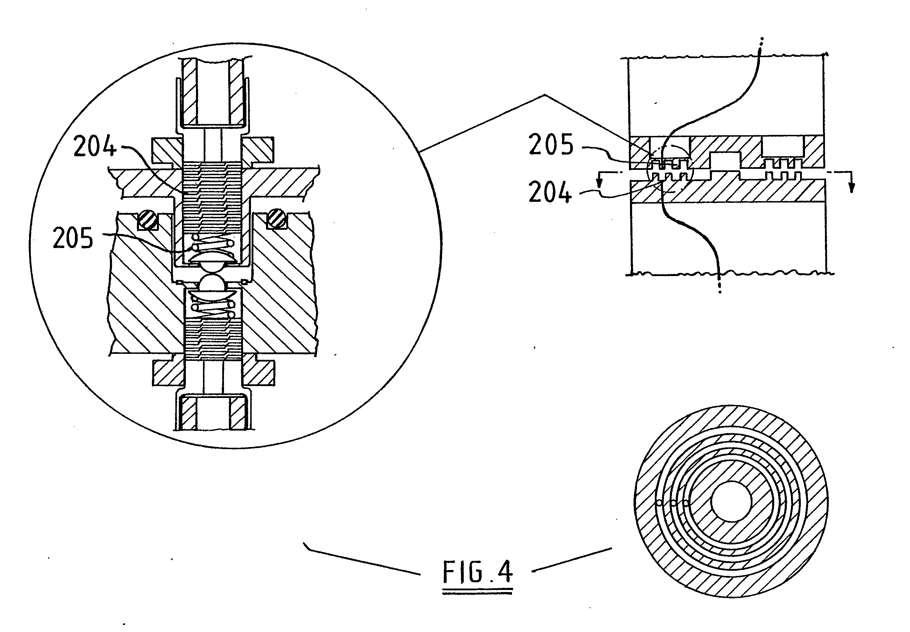

The temporary plugs to be used may be "walked" to their respective stations under the control and supervision of the transit device. This device 200, shown in section in Figure 3, is a self-propelling pig which operates on the principle of cyclic extension and contraction of its telescopic body 201 in combination with alternative anchoring of each end 202,203 to the pipeline 12. Locked on to a temporary plug 140, by the special screw 220 on the end of its hydraulic motor 221 shaft 222, the transit device supplies the temporary plug with hydraulic power via the male 204 and female 205 annular discs on their respective faces, as detailed in Fig. 4.

The combination of the Transit device 200 and the temporary plug 140 is designed to have a length which will permit negotiation of pipeline bends of about 3D. Templar may be introduced into a live pipeline by the Standard Pigging Technique. Modification to the existing Pig launchers by way of the installation of a stuffing box is necessary.

## "Templar" The System

The system comprises 4 distinct sub systems:
1) The Hydraulic Power Unit or electrical supply.
2) The Umbilical.
3) The transit device (a self-propelling pig).
4) Plugs (temporary pipeline seal units).

## 1) The Hydraulic Power Unit (HPU)

Situated in close proximity to the pipeline being modified, the HPU will supply all the hydraulic fluid pressure and flows require for the operation. It will be of a standard well proven NL Shaffer design of high reliability incorporating hydraulic pump, accumulator, tank and controls.

## 2) The Umbilical

Transmission of required pressures and flows to plug and transit device will be via the Umbilical. A standard and proven NL Shaffer Workover Reel would pay out the umbilical at a rate commensurate with the velocity of plug and transit device along the pipeline. The umbilical will comprise about 12 supply hoses with a slim stainless steel wire hawser as its core. Connection to the transit device would be made via the stuffing box prior to the launcher being sealed and pressurised in readiness for the journey to the chosen siting. The main tension will be taken up by the hawser which would be used to retrieve the pipeline devices should the unforeseen occur e.g. catastrophic loss of hydraulics. It is estimated that the O.D. of the umbilical would be under 6 cms using 9.6 mm I.D. tubing.

## 3) The Transit Device ("Walker")

Incorporating a unique combination of simple and reliable techniques the transit device will "walk" the plugs to their final destination whilst the line is under full working pressure. Utilising an envelope which allows passage via 3D pipeline bends and selection of motorised equipment of modest dimensions allows optimum packaging of components within the transit device.

Alignment of hydraulic interconnections between the transit device and its pay load is assured by utilising male and female annular hydraulic connections. These concentric rings are tightly sealed under the action of the transit device's powerful hydraulic motor and screw arrangement.

"Walking" the transit device is accomplished by cyclically operating the two hydraulic brakes and piston.

Reference to Figs. 3, 4 and 5 and the following text will provide details of the "walking" operation.

## Walking

The transit device with temporary plug attached would initially be in the retracted mode within the sealed pig launcher. The main pig launcher valve would then be cracked in accordance with Platform procedures and the pressure allowed to equalise around the transit device and its pay load.

The trailing-end brake 206 would then be energised to apply with the leading-end brake 207 de-energised to release it. Hydraulic pressure would then be applied to the piston 208 which will cause the front end 202 of the "walker" to move forward to a maximum of .5 metres. The leading-end brake 207 will then be energised hydraulically to grip the I.D. of the pipeline 12. With the trailing-end brake 206 in the de-energised condition hydraulic pressure is then applied to the opposite end of the piston 208 causing the walker to assume the fully retracted mode, the temporary plug and its walker have thus negotiated the first 1/2 metre of their journey.

Repeated cycles of this operation will bring the Templar plug combination to its destination.

Arrival of the plug at its pre-ordained station might be announced by the activation of an acoustic "Pinger" previously sited by diving personnel.

Upon receipt of this signal the motion of the units along the pipe would cease and the transit device would attain the fully retracted mode.

Should the final destination of the temporary plug be in the vertical position the b rake or brakes of the plug would be energised to maintain the plug on station after being undocked from the transit device. Such a procedure would also be necessary to allow the undocking process to take place anyway.

With the temporary plug now on station hydraulic pressure is fed to its motor which slowly screws the sealing flange plate 152 back toward the primary seals 154.

Under high torque the flange compresses the seals such that they will maintain a high integrity barrier between the section of the pipeline which shall be reduced eventually to atmospheric.

With the primary seals armed the hydraulic motor 221 of the transit device 200 is activated to undock it from the plug 140. Once separation is secured the walking process is reversed and the unit makes its way back toward the pig launcher.

This procedure may be repeated should it be necessary to place more than one plug on station.

## 4) The Temporary Plugs or Pipeline Seal Units

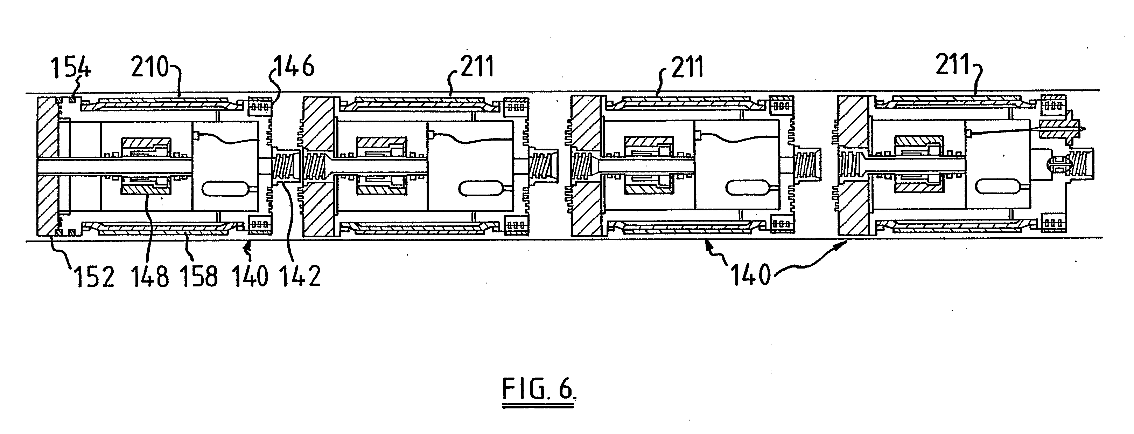

Figure 6 shows sectional views of the temporary plug 140 construction. There are basically two varieties of plug, primary 210 and intermediate 211. The intermediate plugs 211 are required in instances where by virtue of pipeline construction it is not possible to transport a plug of sufficient length to provide acceptable restraining grip on the pipe I.D. Other requirements for intermediate plugs may be to provide as high a factor of safety as may be determined by the pipeline parameters i.e. unknown co-efficient of friction or situations where surging in pressure is present which may bring the ratio of the axial force to the restraining force below 1.5 in gross terms.

If we consider two situations, one where a single plug is adequate and one where it is necessary to provide intermediate plugging it will perhaps give some insight to the versatility of "Templar".

## Case I

## The Single Plug

Whilst docked with the transit device the primary seals on the plug were armed and its brake or brakes energised. The accumulators inside the plug will ensure the correct pressure within the brakes to provide an extremely positive grip o the Pipe I.D. once the undocking procedure is completed. Depressuring of the section of pipeline to be modified now takes place resulting in a pressure differential becoming evident across the plug. This will cause the pipeline medium which is present in the friction chambers to expand forcing the friction grip against the pipe I.D. without damaging it. Because the area of the friction grip is greatly in excess of that of the cross sectional area of the plug a radial restraining force is produced magnitudes of times higher than the axial force tending to remove the plug from station.

It should be noted that the pressure testing Phase of the modified pipeline has not been discussed in this section and is detailed in a subsequent paragraph.

## Case II - Intermediate Plugs

Intermediate plugs have essentially the same carcass as the primary plug with 2 exceptions.

a) They do not have a primary sealing flange or primary seals.

b) They might have "dummy" male hydraulic interconnections which are used along with the female interconnections of the primary plug to form a gas tight seal around the cavity between the primary plug and themselves.

Intermediate plugs are docked with the primary plug by utilising the thread on the shaft of their motor. A guide cone ensures correct presentation of the male thread to the female thread of the primary plug. In cases where it is not designed to seal the cavity between the primary and intermediate plugs by the "dummy" interconnectors alternative sealing may be accomplished by seal arrangements on the motor shaft of the intermediate plug motor. Refer to figure 6.

It is estimated that, considering the worst cast in any pipeline the maximum number of plugs deployed would be three. With the final plug on station the "walker" is retrieved and depressurising of the required section of pipeline takes place.

Pressure Testing

Testing to 1.5 times pipeline working pressure is accomplished fairly simply by the "Templar" techniques. In cases where the section of the pipeline to be modified is directly above the plugs a pressure test plug may be introduced either when the primary plug is run or after pipeline modifications have been carried out.

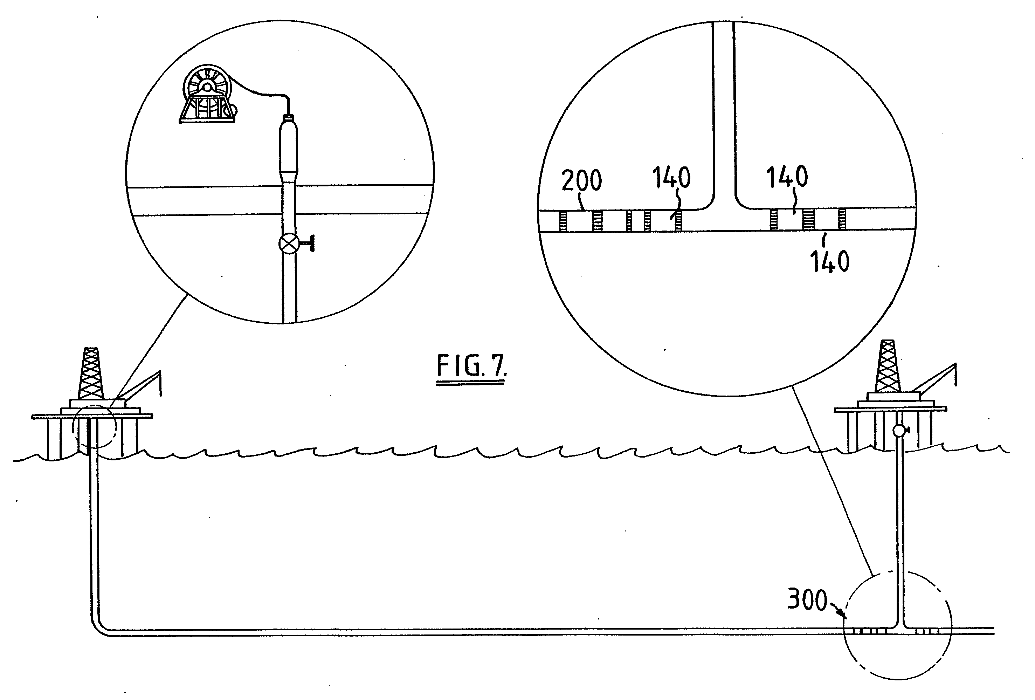

The pressure test plug is simply a primary plug 140 placed in the pipeline in the opposite hand. Figure 7 shows an arrangement of plugs at a "T" junction 300 with pressure test plugs immediately adjacent to the "T".

In situations similar to that shown in figure 7 it will be necessary to run the pressure test plug prior to the siting of the primary plugs.

Although this necessitates two extra plugs being run it does obviate the need to depressure the horizontal sections of the "T" in situations where they are of considerable length.

CRITICAL COMPONENTS

DESIGN SPECIFICATIONS

FRICTION GRIPS

The Design of the Friction grips will be such that they will be capable of withstanding full line pressure in the activated mode. With an expected line pressure of 2000 psi in a 36" pipeline an axial force of 900 Ton will be attempting to remove the plug from station.

The surface area of the friction grip in contact with the Pipe I.D. would be in the order of 31 square feet delivering a gross radial force of 4000 Ton.

If we assume a coefficient of friction between the friction grip surface area and the Pipe I.D. of .2 a nett restraining force of 800 Ton would be present. In this case with a plug of just over 1 meter in length it would be necessary to install two temporary plugs providing a nett restraining force of 1600 Ton.

THE BRAKES

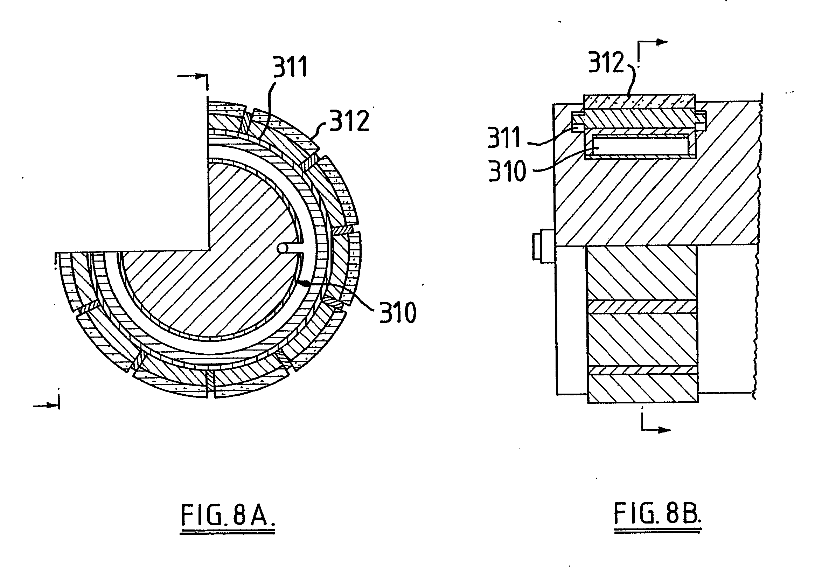

Figure 8A and 88 show the section and end view on one of the brakes. The special bladder 310 has anti-extrusion plates 311 integral in its construction. The friction segments 312 overlap these plates and in the fully retracted mode form a diameter of 34 inches. Each segment is of 6" width and the gross restraining force is about 300 Ton with the pipeline at full pressure and about 900 Ton with the line de-energised (hydraulic pressure is 3000 psi). With a coefficient of friction of .2 the resulting nett radial forces would be about 60 Ton and about 180 Ton respectively.

HYDRAULIC MOTORS

The motors will operate at a pressure of 3000 psi typically. It is desirable that the flow is low to provide high torque characteristics. A vane type motor is preferered. At 3000 psi and a flow rate of about 10 G.P.M. torques of up to 1800 ft lbs may be obtained at 30 r.p.m. Dependent on selection of screw diameter this torque may produce up to about 600 psi at the pipe/plug interface to secure an effective main seal capable of withstanding a 2000 psi differential.

MAIN SEALING ARRANGEMENT

The exact geometry of this seal will be such that once locked in position by the hydraulic motor and depressurised on one side the pipeline pressure will tend to increase its sealing capability. The same characteristics will be associated with the main seal of the pressure test plug.

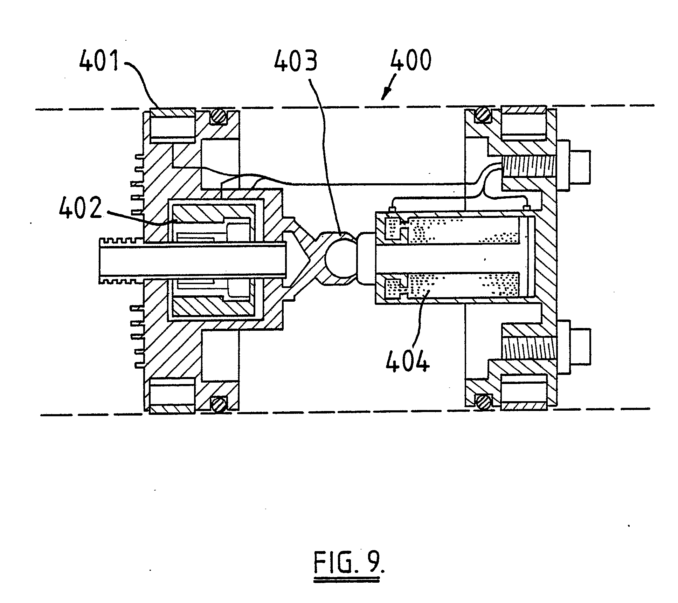

ARTICULATION (REF. FIG.9)

Negotiations of up to x 3D pipeline bends is accomplished by the Templar Systems articulated walker 400 (figure 9) operating on the principles described earlier.

The front section of the walker 401 which contains the high torque hydraulic motor 402 is articulated by standard means 403 to the rear section which houses the piston arrangement 404. The design ensures that the estimated maximum length of 1.7 metres is not exceeded by the combined length of the temporary plug and the front section of the walker.

## ALTERNATIVE USES OF TEMPLAR

The unique construction of Templar's walker permits the use of the device as a pipeline maintenance tool in its own right.

By attaching and locking various tools to the screw of the walkers powerful hydraulic motor pipeline maintenance may be carried out in selected cases without the inconvenience of platform shutdown.

Modifications and variations may be in the above -described arrangements without departing from the scope of the invention.

## Claims

1. A temporary pipeline plug characterised in that said plug comprises a self-anchoring pipeline seal unit and a detachably coupled pipeline pig for propelling the self-anchoring seal along the pipeline.

2. A temporary pipeline plug as claimed in Claim 1 wherein the pipeline pig is a self-propelling pig capable of propelling itself along the pipeline independently of any fluid medium carried by the pipeline.

3. A temporary pipeline plug as claimed in Claim 2, wherein the self propelling pig propels itself along the pipeline by a crawling or differential stepping movement.

4. A temporary pipeline plug as claimed in any one of the preceding Claims, wherein the pipeline seal unit includes a circumferential chamber which is inflatable and thereby expansible by the differential pressure of fluid medium in the pipeline on one side of the seal unit in excess of the pressure on the other side of the seal unit, the exterior of the chamber being adapted to grip the pipeline when so inflated, preferably by the provision of friction shoes secured thereon.

5. A temporary pipeline plug a claimed in any one of the preceding Claims, wherein the pipeline seal unit includes a circumferential anchor seal which is mechanically actuable selectively to engage or disengage the pipeline so as both to seal the pipeline and to anchor the seal unit against movement along the pipeline.

6. A temporary pipeline plug as claimed in any one of the preceding Claims, wherein the pipeline seal unit includes a parking brake operable to hold the seal unit against movement along the pipeline.

7. A temporary pipeline plug as claimed in any one of the preceding Claims, wherein the pipeline seal unit includes a fluid passage through the seal unit from one end to the other end, and closable at the low pressure end by a double-acting check valve.

8. A temporary pipeline plug as claimed in any one of the preceding Claims, wherein the pipeline seal unit includes power and/or signal coupling means for coupling the seal unit to the pig for transmission of hydraulic or pneumatic or electrical power and/or signals therebetween.

9. A temporary pipeline plug as claimed in Claim 5 wherein the anchor seal is operatively coupled to an anchor seal actuator within the seal unit, the actuator taking the form of a motor-driven screw actuator selectively operable to cause radial expansion of the anchor seal into sealing and anchoring contact with the pipeline.

FIG. 1.

EP 0 367 633 A2

140  12  160

FIG. 2.

EP 0 367 633 A2

FIG. 3.

FIG.4

EP 0 367 633 A2

FIG.5.

FIG. 6.

FIG.7.

FIG. 8A.

FIG. 8B.

EP 0 367 633 A2

401    403    400

402

404

FIG. 9.